# EUROPÄISCHE PATENTSCHRIFT

(11) **EP 0 639 476 B1**
(45) Veröffentlichungstag und Bekanntmachung des Hinweises auf die Patenterteilung: **20.01.1999**
(21) Anmeldenummer: 94111958.8
(22) Anmeldetag: 01.08.1994
(51) Int. Cl.: B60K 41/06

(54) **Verfahren zur Reduzierung des Brennkraftmaschinenmoments bei Schaltvorgängen eines Getriebes**
Method of reducing combustion engine torque during gear shifting of a transmission
Procédé de réduire le couple d'un moteur à combustion interne lors du changement de vitesse d'une transmission

(30) Priorität: 19.08.1993 DE 4327906
(43) Veröffentlichungstag der Anmeldung: 22.02.1995
(73) Patentinhaber: Bayerische Motoren Werke Aktiengesellschaft, 80788 München (DE)
(72) Erfinder: Kraemer, Gerd, D-82065 Baierbrunn (DE); Wolf, Lothar, D-80939 München (DE)

(56) Entgegenhaltungen:
- EP-A- 0 512 728
- DE-A- 2 742 033
- DE-A- 2 848 624
- DE-A- 3 018 033
- US-A- 4 599 918
- US-A- 5 086 666
- BOSCH TECHNISCHE BERICHTE, vol.7, no.4, 1983, STUTTGART (DE) page 166 - 174, SCHWAB, M.; MüLLER, A. 'DER MOTOREINGRIFF - EIN NEUES ELEMENT DER ELEKTRONISCHEN GETRIEBESTEUERUNG'

## Beschreibung

Die Erfindung betrifft ein Verfahren zur Reduzierung des Brennkraftmaschinenmoments bei Schaltvorgängen eines Getriebes in Kraftfahrzeugen nach dem Oberbegriff des Patentanspruchs 1.

Ein derartiges Verfahren ist beispielsweise aus der DE-A-28 48 624 bekannt. Bei diesem bekannten Verfahren zur Reduzierung des Brennkraftmaschinenmoments wird zu Beginn eines Schaltvorganges die momentane Brennkraftmaschinendrehzahl erfaßt. Der Beginn eines Schaltvorganges ist beispielsweise durch ein von einem Getriebesteuergerät ausgegebenen Schaltbefehl und/oder durch eine für den Beginn eines Schaltvorganges charakteristische Brennkraftmaschinendrehzahländerung erkennbar (vgl. z. B. DE 30 18 033 A1). Bei dem aus der DE 28 48 624 A1 bekannten Verfahren wird darüber hinaus die am Ende des Schaltvorganges zu erwartende Brennkraftmaschinendrehzahl, die sogenannte Synchrondrehzahl, vorausberechnet. Die Synchrondrehzahl ist beispielsweise durch die zu Beginn des Schaltvorganges erfaßte Brennkraftmaschinendrehzahl und durch den Übersetzungssprung des diesem Schaltvorgang zugrundeliegenden Gangwechsels ermittelbar. Die Reduzierung des Brennkraftmaschinenmoments während des Schaltvorganges bzw. zwischen dem Beginn und dem Ende eines Schaltvorganges wird bei einem Anfangsdrehzahlwert begonnen und bei einem Enddrehzahlwert beendet. Die Anfangs- und Enddrehzahlwerte liegen zwischen den Werten der zu Beginn des Schaltvorganges erfaßten und der am Ende des Schaltvorganges zu erwartenden bzw. vorausberechneten Brennkraftmaschinendrehzahlen und werden auch in Abhängigkeit von der Differenz dieser Brennkraftmaschinendrehzahlen ermittelt. Der Betrag der Reduzierung des Brennkraftmaschinenmoments wird in Abhängigkeit von dem Wert der zu Beginn des Schaltvorganges erfaßten Brennkraftmaschinendrehzahl vorgegeben.

Bei diesem bekannten Verfahren wird der Brennkraftmaschinendrehzahlverlauf zwischen den zu Beginn und am Ende des Schaltvorganges vorliegenden Brennkraftmaschinendrehzahlen nicht berücksichtigt. Da die Reduzierung des Brennkraftmaschinenmoments ohne Berücksichtigung dieses Brennkraftmaschinendrehzahlverlaufes lediglich durch einen vorgegebenen Wert gesteuert wird, sind Abweichungen des sich dadurch ergebenden Brennkraftmaschinendrehzahlverlaufes von einem optimalen Brennkraftmaschinendrehzahlverlauf beispielsweise aufgrund mechanischer Toleranzen oder aufgrund der Temperaturabhängigkeit der Hydraulik möglich. Durch diese Abweichungen ist keine optimale Schaltqualität bzw. Schaltzeit gewährleistet, wodurch ein erhöhter Verschleiß oder Komforteinbußen auftreten.

Auch aus der Druckschrift 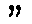 Bosch Technische Berichte 7 (1983) 4", Seiten 166 bis 174, ist ein Verfahren zur Reduzierung des Brennkraftmaschinenmoments zwischen dem Beginn und dem Ende eines Schaltvorganges bei elektronisch gesteuerten Automatikgetrieben in Kraftfahrzeugen in Form eines sog. 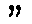 Motoreingriffs" bekannt. Dieser bekannte Motoreingriff besteht lediglich in einem Reduzieren des Brennkraftmaschinenmoments im wesentlichen um einen konstanten Betrag für die Zeit zwischen vorgegebenen Anfangs- und Endwerten der Motordrehzahl. Somit wird lediglich die Zeitdauer der Reduzierung des Brennkraftmaschinenmoments in Abhängigkeit von der Motordrehzahl vorgenommen, nicht jedoch der Betrag der Reduzierung des Brennkraftmaschinenmoments in der Weise eingestellt, daß ein gewünschter Verlauf der Motordrehzahl erreicht wird.

Weiterhin ist aus der DE-A-27 42 033 ebenfalls ein Verfahren zur Reduzierung des Brennkraftmaschinenmoments während eines Gangwechsels bekannt, bei dem die Motordrehzahl beim Umschalten des Getriebes von einem Gang in einen anderen Gang durch einen Regler von der dem einen Gang entsprechenden Drehzahl mit einem vorgegebenen Drehzahlgradienten bis zu der dem anderen Gang entsprechenden Drehzahl verändert wird. Hierbei bleibt der Wert der zu erwartenden Brennkraftmaschinendrehzahl am Ende eines Schaltvorganges unberücksichtigt. In Abhängigkeit von dem vorgegebenen Gradienten ergibt sich somit eine nicht vorhersehbare Schaltdauer, die jedoch wesentlich die Schaltqualität bzw. den Schaltkomfort bei einem Gangwechsel beeinflußt.

Es ist Aufgabe der Erfindung, die Schaltqualität bzw. die Schaltzeiten während eines Schaltvorganges bezüglich des mechanischen Verschleißes und bezüglich der Komfortanforderungen zu optimieren.

Diese Aufgabe wird durch die kennzeichnenden Merkmalen der Patentansprüche 1 und/oder 2 gelöst. Erfindungsgemäß wird der Betrag der Reduzierung des Brennkraftmaschinenmoments zwischen dem Beginn und dem Ende des Schaltvorganges derart geregelt, daß ein vorgegebener Brennkraftmaschinendrehzahlverlauf erreicht wird. Dazu sind beispielsweise für alle möglichen Gangwechsel optimale Brennkraftmaschinendrehzahlverläufe in Form von Kennfeldern abgespeichert, woraus in Abhängigkeit von dem momentan vorliegenden Gangwechsel bei einem Schaltvorgang ein Brennkraftmaschinendrehzahlverlauf ausgewählt und vorgegeben wird. In den abgespeicherten Brennkraftmaschinendrehzahlverläufen kann beispielsweise auch eine Abhängigkeit von der Differenz zwischen den bei Beginn und am Ende des Schaltvorganges vorliegenden Brennkraftmaschinendrehzahlen oder eine Abhängigkeit von der Temperatur der Hydraulikflüssigkeit im Getriebe enthalten sein. Der vorgegebene Brennkraftmaschinendrehzahlverlauf kann beispielsweise in Form einer Drehzahländerung pro Zeiteinheit oder in Form eines Verhältnisses, z.B. des Verhältnisses der Differenz zwischen der momentanen und der am Ende des Schaltvorganges vorliegenden Drehzahl zur Differenz zwischen der zu Beginn und der am Ende des Schaltvorganges vorliegenden Drehzahl, vorgegeben werden.

Die Reduzierung des Brennkraftmaschinenmoments kann in Abhängigkeit von der Höhe des Betrags, der zum Erreichen des vorgegebenen Brennkraftmaschinendrehzahlverlaufs erforderlich ist, auf unterschiedliche Weise vorgenommen werden. Vorzugsweise wird für eine schnelle Reduzierung eine Zündwinkelspätverstellung vorgenommen. Es ist jedoch auch möglich, insbesondere bei hohen Beträgen der Reduzierung, die Kraftstoffeinspritzmenge und/oder den Drosselklappenöffnungswinkel zu reduzieren.

Durch die erfindungsgemäße Regelung der Reduzierung des Brennkraftmaschinenmoments entsprechend eines optimalen Brennkraftmaschinendrehzahlverlaufes werden im Gegensatz zu den bekannten Steuerungen der Reduzierung des Brennkraftmaschinenmoments der Kupplungsverschleiß vermindert und der Schaltkomfort erhöht.

Der vorgegebene Brennkraftmaschinendrehzahlverlauf wird vorzugsweise aus einem normierten Brennkraftmaschinendrehzahlverlauf in Abhängigkeit von der Differenz zwischen der bei Beginn des Schaltvorganges erfaßten Brennkraftmaschinendrehzahl und der nach dem Schaltvorgang zu erwartenden Brennkraftmaschinendrehzahl gebildet.

Beispielsweise ist es möglich, für alle Hochschaltungen und alle Rückschaltungen jeweils nur einen Brennkraftmaschinendrehzahlverlauf vorzugeben, der in Abhängigkeit von der genannten Differenz der Brennkraftmaschinendrehzahlen verändert wird. Dabei kann beispielsweise der Brennkraftmaschinendrehzahlverlauf derart verändert werden, daß bei großen Differenzen die Schaltzeit verlängert und bei kleinen Differenzen die Schaltzeit verkürzt wird. Mit dieser erfindungsgemäßen Weiterbildung kann durch Ab-speicherung nur einer (oder weniger) Kennlinie(n) anstelle einer Vielzahl von Kennfeldern Speicherplatz im Steuergerät eingespart werden.

Eine vorteilhafte Weiterbildung der Erfindung ist der Gegenstand des Patentanspruchs 3.
Erfindungsgemäß wird das Moment der zuzuschaltenden Kupplung während des Schaltvorganges zusätzlich erhöht, wenn der Betrag der erforderlichen Reduzierung des Brennkraftmaschinenmoments größer als ein maximal möglicher oder maximal zulässiger Betrag ist.
Wird beispielsweise das Motormoment lediglich durch Zündwinkelspätverstellung reduziert, ist der Betrag der Reduzierung durch eine maximal zulässige Zündwinkelspätverstellung begrenzt. Reicht also ein Eingriff in die Betriebsgrößen der Brennkraftmaschine nicht aus, um die erforderliche Reduzierung des Brennkraftmaschinenmoments zu erreichen, wird das Moment in der zuzuschaltenden Kupplung derart erhöht, daß trotzdem der vorgegebene Brennkraftmaschinendrehzahlverlauf eingehalten wird.

Das Moment in der zuzuschaltenden Kupplung während des Schaltvorganges wird normalerweise über Drucksteuerung eingestellt. Erfindungsgemäß wird beispielsweise das Moment in der zuzuschaltenden Kupplung dadurch erhöht, daß ein Offset-Druck auf den normalerweise eingestellten Druckverlauf addiert wird.

In der Zeichnung ist ein Ausführungsbeispiel der Erfindung dargestellt. Es zeigt
- Fig. 1: die Bestimmung eines Faktors in Abhängigkeit von der Differenz zwischen der Brennkraftmaschinendrehzahl am Anfang und am Ende eines Schaltvorganges,
- Fig. 2: einen normierten Brennkraftmaschinendrehzahlverlauf, einen Drehzahlverlauf nach dem Stand der Technik und einen erfindungsgemäß vorgegebenen Brennkraftmaschinendrehzahlverlauf in Form von Drehzahlverhältnisverläufen und
- Fig. 3: eine Reduzierung des Brennkraftmaschinenmoments nach dem Stand der Technik und eine erfindungsgemäße Reduzierung des Brennkraftmaschinenmoments.

Im folgenden wird die Brennkraftmaschinendrehzahl n ausschließlich mit Drehzahl n und das Brennkraftmaschinenmoment M_{M} ausschließlich mit Motormoment M_{M} bezeichnet.

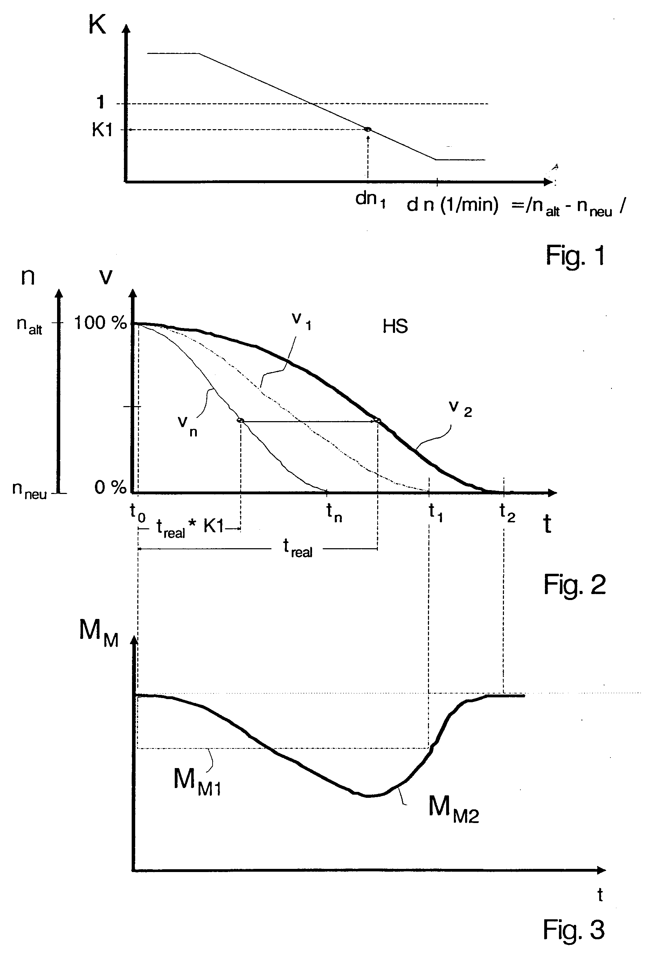

Im Diagramm der Fig. 1 ist auf der Abszisse die Drehzahldifferenz dn zwischen den Drehzahlen am Anfang nₐₗₜ und am Ende nₙₑᵤ eines Schaltvorganges und auf der Ordinate ein Faktor K aufgetragen. Die Drehzahl nₐₗₜ am Anfang eines Schaltvorganges wird gemessen und die Drehzahl nₙₑᵤ am Ende eines Schaltvorganges wird z.B. vorausberechnet. Das Diagramm in Fig. 1 stellt eine mögliche Kennlinie dar, durch die jeder möglichen Drehzahldifferenz dn zwischen dem Anfang und dem Ende eines Schaltvorganges ein eigener Faktor K zugeordnet wird. Beispielsweise gehört zu einer ersten Differenz dn₁ ein erster Faktor K1. Der bei jedem Schaltvorgang durch das Diagramm der Fig. 1 ermittelte Faktor K wird zur Bestimmung des vorgegebenen Drehzahlverlaufs bzw. Drehzahlverhältnisverlaufs, der in Fig. 2 dargestellt ist, verwendet. Der Faktor K sinkt mit steigender Differenz dn.

In Fig. 2 sind verschiedene Drehzahlverläufe n, insbesondere in Form von Drehzahlverhältnisverläufen v, für eine Hochschaltung HS dargestellt. Auf der Abszisse der Fig. 2 ist die Zeit t und auf der Ordinate die Drehzahl n zwischen nₐₗₜ und nₙₑᵤ sowie normiert das Drehzahlverhältnis v zwischen 0% und 100% dargestellt, wobei der Drehzahl nₙₑᵤ nach dem Schaltvorgang der 0%-Wert und der Drehzahl nₐₗₜ vor dem Schaltvorgang der 100%-Wert zugeordnet ist. Der Drehzahlverhältnisverlauf vₙ, der mit dünner durchgezogener Linie eingetragen ist, stellt einen gespeicherten normierten Drehzahlverlauf bzw. Drehzahlverhältnisverlauf dar, der gleich dem vorgegebenen Drehzahlverhältnisverlauf für den Faktor K=1 ist.
Der vorgegebene Drehzahlverlauf in Form des Drehzahlverhältnisverlaufes v₂ wird aus dem normierten Drehzahlverhältnisverlauf vₙ dadurch gebildet, daß während des Schaltvorganges kontinuierlich, z.B. zu jedem Abtastzeitpunkt, die jeweils seit dem Schaltbeginn zum Zeitpunkt t₀ vergangene Zeit tᵣₑₐₗ ermittelt wird, diese Zeit tᵣₑₐₗ mit dem Faktor K, hier K1<1, multipliziert wird und das dem Zeitpunkt tᵣₑₐₗ*K1 zugeordnete Drehzahlverhältnis v aus dem abgespeicherten normierten Drehzahlverhältnisverlauf vₙ ausgewählt und zum Zeitpunkt tᵣₑₐₗ vorgegeben wird. Diese Vorgehensweise wird solange wiederholt, bis der Schaltvorgang zum Zeitpunkt t₂ beendet ist. Bei einem Faktor K<1 wird die vorgegebene Schaltzeit t2-t0 länger als die normierte Schaltzeit tn-t0.

In Fig. 3 ist mit der dicken durchgestrichenen Linie das Motormoment M_{M2} dargestellt, das derart geregelt wird, daß der vorgegebene Drehzahlverhältnisverlauf v₂ erreicht wird. Die Regelung des Motormoments M_{M2} beginnt mit einer Drehzahl nₐₗₜ, der Synchrondrehzahl vor dem Schaltvorgang, zum Zeitpunkt t₀, der den Beginn eines Schaltvorganges kennzeichnet, und endet nach der Schaltzeit t₂-t₀ bei einer Drehzahl nₙₑᵤ, der Synchrondrehzahl am Ende des Schaltvorganges.

Die strichpunktierten Linien in Fig. 2 und Fig. 3 zeigen im Vergleich zu den erfindungsgemäßen dick durchgestrichenen Linien die Reduzierung des Brennkraftmaschinenmoments nach dem Stand der Technik. Beim Stand der Technik wird zu Beginn des Schaltvorganges zum Zeitpunkt t₀ das Motormoment M_{M1} um einen bestimmten Betrag reduziert, der bis zum Erreichen der neuen Synchrondrehzahl nach einer sich zufällig ergebenden Schaltzeit t₁ und nach einem sich zufällig ergebenden Drehzahl(verhältnis)verlauf v₁ beibehalten wird. Dadurch sind Abweichungen des sich ergebenden Drehzahlverhältnisverlaufs v₁ von dem optimalen Drehzahlverhältnisverlauf v₂ möglich, wie im Beispiel in Fig. 2 dargestellt.

Durch die Regelung des Betrags der Reduzierung des Motormoments M_{M} entsprechend einem vorgegebenen optimalen Drehzahlverlauf (v, n) ist optimaler Schaltkomfort und minimaler Verschleiß erreichbar.

In Fig. 3 ist mit dem Verlauf des Motormoments M_{M2} eine Sollkennlinie des Motormoments M_{M} dargestellt, die nötig ist, um den vorgegebenen Drehzahlverhältnisverlauf v₂ zu erreichen. Ist der Betrag des hier vorgegebenen zu reduzierenden Motormoments M_{M2} durch Betriebsgrößenbeeinflussung des Motors nicht erreichbar, kann zusätzlich, hier nicht dargestellt, das Moment der zuzuschaltenden Kupplung erhöht werden, um den vorgegebenen Drehzahlverhältnisverlauf v₂ in jedem Fall zu erreichen.

## Patentansprüche

1. Verfahren zur Reduzierung des Brennkraftmaschinenmoments zwischen dem Beginn und dem Ende eines Schallvorganges eines Getriebes in Kraftfahrzeugen mit einem Steuergerät, das den Beginn eines Schallvorganges sowie kontinuierlich die aktuelle Brennkraftmaschinendrehzahl erfaßt und das die am Ende des Schallvorganges zu erwartende Brennkraftmaschinendrehzahl vorausberechnet, dadurch gekennzeichnet , daß der Betrag der Reduzierung des Brennkraftmaschinenmoments (M_{M2}) zwischen dem Beginn (t₀) und dem Ende (t₂) des Schallvorganges derart geregelt wird, daß ein optimierter Brennkraftmaschinendrehzahlverlauf (v₂) erreicht wird, wobei der optimierte Brennkraftmaschinendrehzahlverlauf (v₂) in Abhängigkeit von der Differenz (dn) zwischen der bei Beginn (t₀) des Schallvorganges erfaßten Brennkraftmaschinendrehzahl (nₐₗₜ) und der nach dem Schaltvorgang (t₂) zu erwartenden Brennkraftmaschinendrehzahl (nₙₑᵤ) vorgegeben wird.

2. Verfahren zur Reduzierung des Brennkraftmaschinenmoments zwischen dem Beginn und dem Ende eines Schallvorganges eines Getriebes in Kraftfahrzeugen mit einem Steuergerät, das den Beginn eines Schaltvorganges sowie kontinuierlich die aktuelle Brennkraftmaschinendrehzahl erfaßt und das die am Ende des Schallvorganges zu erwartende Brennkraftmaschinendrehzahl vorausberechnet, dadurch gekennzeichnet , daß der Betrag der Reduzierung des Brennkraftmaschinenmoments (M_{M2}) zwischen dem Beginn (t₀) und dem Ende (t₂) des Schallvorganges derart geregelt wird, daß ein optimierter Brennkraftmaschinendrehzahlverlauf (v₂) erreicht wird, wobei der optimierte Brennkraftmaschinendrehzahlverlauf (v₂) vorgegeben wird, indem ausgehend von einem normierten Brennkraftmaschinendrehzahlverlauf in Abhängigkeit von der Differenz (dn) zwischen der bei Beginn (t₀) des Schallvorganges erfaßten Brennkraftmaschinendrehzahl (nₐₗₜ) und der nach dem Schaltvorgang (t₂) zu erwartenden Brennkraftmaschinendrehzahl (nₙₑᵤ) dieser normierte Brennkraftmaschinendrehzahlverlauf derart verändert wird, daß bei großen Differenzen (dn) die Schaltzeit verlängert und bei kleinen Differenzen (dn) die Schaltzeit verkürzt wird.

3. Verfahren nach Patentanspruch 1 oder 2, dadurch gekennzeichnet, daß das Moment der zuzuschaltenden Kupplung während des Schaltvorganges zusätzlich erhöht wird, wenn der Betrag der zum Erreichen des vorgegebenen Brennkraftmaschinendrehzahlverlaufs (v₂) erforderliche Reduzierung des Brennkraftmaschinenmoments (M_{M2}) größer als ein maximal möglicher oder maximal zulässiger Betrag ist.

## Claims

1. A method for the reduction of the torque of an internal combustion engine between the start and the end of a gear shifting process of a drive in motor vehicles with a control unit, which measures the current revolutions of the internal combustion engine at the start of a gear shifting process as well as continuously and calculates in advance the revolutions of the internal combustion engine to be expected at the end of the gear shifting process, **characterised in that** the amount of the reduction of the torque of the internal combustion engine (M_{M2}) between the start (t₀) and the end (t₂) of the gear shifting process is controlled in such a manner that an optimised curve of the internal combustion engine revolutions (v₂) is obtained, whereby the optimised curve of the internal combustion engine revolutions (v₂) is provided in dependency on the difference (dn) between the measured internal combustion engine revolutions at the beginning (t0) of the gear shifting process and the internal combustion engine revolutions (nₙₑᵤ) to be expected after the gear shifting process (t₂).

2. A method for the reduction of the torque of an internal combustion engine between the start and the end of a gear shifting process of a drive in motor vehicles with a control unit, which measures the current revolutions of the internal combustion engine at the start of a gear shifting process as well as continuously and calculates in advance the revolutions of the internal combustion engine to be expected at the end of the gear shifting process, **characterised in that** the amount of the reduction of the torque of the internal combustion engine (M_{M2}) between the start (t₀) and the end (t₂) of the gear shifting process is controlled in such a manner that an optimised curve of the internal combustion engine revolutions (v₂) is obtained, whereby the optimised curve of the internal combustion engine revolutions (v₂) is provided, whereby arising from a normalised curve of internal combustion engine revolutions in dependency on the difference (dn) between the measured internal combustion engine revolutions (nₐₗₜ) at the start (t₀) of the gear shifting process and the internal combustion engine revolutions (nₙₑᵤ) to be expected after the gear shifting process (t₂), this normalised curve of the internal combustion engine revolutions is altered in such a way that for large differences (dn) the gear shifting time is extended and for small differences (dn) the gear shifting time is shortened.

3. A method according to Claim 1 or 2, **characterised in that** the torque of the coupling to be connected is additionally increased during the gear shifting process, if the amount of reduction of the internal combustion engine torque (M_{M2}), required to obtain the predetermined curve of internal combustion engine revolutions (v₂) is greater than the maximum possible or maximum permitted amount.

## Revendications

1. Procédé pour réduire le couple d'un moteur à combustion interne entre le début et la fin d'une opération de changement de vitesse dans des véhicules automobiles comprenant un appareil de commande qui détecte le début d'une opération de changement de vitesse et, de façon continue, la vitesse de rotation instantanée du moteur et calcule par avance la vitesse de rotation du moteur prévisible pour la fin de l'opération de changement de vitesse,
caractérisé en ce que
l'amplitude de la réduction du couple du moteur à combustion interne (M_{M2}) entre le début (t₀) et la fin (t₂) de l'opération du changement de vitesse, est réglée pour arriver à une courbe de vitesse de rotation optimale (v₂) du moteur à combustion interne, cette courbe de vitesse optimale (v₂) étant prédéterminée en fonction de la différence (dn) entre la vitesse de rotation (n_{anc}) détectée au début (t₀) de l'opération et la vitesse de rotation (nₙₒᵤᵥ) prévisible à la fin de l'opération (t₂).

2. Procédé de réduction du couple du moteur à combustion interne entre le début et la fin d'une opération de changement de vitesse d'un véhicule automobile, avec un appareil de commande qui détecte le début d'une opération de changement de vitesse ainsi qu'en continu la vitesse de rotation actuelle du moteur, et calcule de manière prévisionnelle la vitesse de rotation du moteur prévisible à la fin de l'opération de changement de vitesse,
caractérisé en ce que
on régule l'amplitude de la réduction du couple du moteur (M_{M2}) entre le début (t₀) et la fin (t₂) de l'opération de changement de vitesse pour arriver à une courbe de vitesse optimale (v₂) pour le moteur, cette courbe de vitesse de rotation (v₂) étant prédéterminée en ce que, partant d'une vitesse de rotation normalisée, en fonction de la différence (dn) entre la vitesse de rotation du moteur (n_{anc}) détectée au début de l'opération de commutation (t₀) et la vitesse de rotation (nₙₒᵤᵥ) prévisible pour la fin de l'opération de commutation (t₂), on modifie la courbe normalisée de la vitesse de rotation du moteur pour qu'en cas de différences importantes (dn), la durée du changement de vitesse soit prolongée et que, pour de faibles vitesses (dn) la durée de changement de vitesse soit raccourcie.

3. Procédé selon la revendication 1 ou 2,
caractérisé en ce qu'
on augmente en plus le couple de l'embrayage à embrayer pendant le changement de vitesse, si l'amplitude de la réduction du couple (M_{M2}) du moteur, nécessaire pour atteindre la courbe prédéterminée (v₂) de la vitesse de rotation du moteur, est supérieure à une amplitude maximale possible ou maximale autorisée.
